# EUROPÄISCHE PATENTSCHRIFT

(11) **EP 0 501 402 B1**
(45) Veröffentlichungstag und Bekanntmachung des Hinweises auf die Patenterteilung: **28.12.1994**
(21) Anmeldenummer: 92103146.4
(22) Anmeldetag: 25.02.1992
(51) Int. Cl.: F24F 5/00

(54) **Vorrichtung zum Kühlen von Raumluft**
Device for cooling room air
Dispositif pour refroidir l'air d'un local

(30) Priorität: 01.03.1991 DE 9102458 U
(43) Veröffentlichungstag der Anmeldung: 02.09.1992
(73) Patentinhaber: Gebrüder Trox, GmbH, D-47506 Neukirchen-Vluyn (DE)
(72) Erfinder: Finkelstein, Wolfgang, Dipl.-Ing., D-4133 Neukirchen-Vluyn (DE)
(74) Vertreter: Stark, Walter, Dr.-Ing.

(56) Entgegenhaltungen:
- WO-A-88/10402
- FR-A- 791 985
- FR-A- 1 107 119

## Beschreibung

Die Erfindung betrifft eine Vorrichtung zum Kühlen von Raumluft nach dem oberbegriff des Anspruchs 1 (siehe z.B. FR-A-791 985). Es sind Klimaanlagen bekannt, mit denen Raumluft nicht nur erwärmt, sondern auch gekühlt werden kann. Ist ein Raum nicht an eine solche Klimaanlage angeschlossen, dann ist die Kühlung der Raumluft problematisch. Das gilt auch für Räume, die zwar an eine Klimaanlage angeschlossen sind, die aber thermisch hoch belastet sind. Hier will die Erfindung Abhilfe schaffen.

Aufgabe der Erfindung ist es, die Kühlung von thermisch hoch belasteten Räumen zu verbessern.

Diese Aufgabe wird gelöst, mit einer Vorrichtung zum Kühlen von Raumluft nach Anspruch 1. Eine solche Vorrichtung wird an einer Raumwand unterhalb einer Raumdecke angebracht und kann auch nachträglich eingebaut werden. Der Kühlkonvektor und die Wärmeleitschienen können an ein gesondertes Kühlaggregat oder an ein zentrales Kühlaggregat angeschlossen sein. Der Kühlkonvektor nimmt durch Konvektion Wärme aus einem Luftstrom auf, der von oben nach unten durch den Schacht streicht. Wenn der Schacht unterhalb der Raumdecke endet, bildet sich eine Konvektionsströmung aus, bei der ein Luftstrom aus dem Deckenbereich zum oberen Ende des Schachtes geführt wird, wobei der Luftstrom unter Abkühlung durch den Schacht absinkt und der gekühlte Luftstrom sich dann wieder im Raum verteilt. Das obere Ende des Schachtes kann aber auch unter einem Schlitzdurchlaß der Decke angeordnet sein, wobei aus dem Schlitzdurchlaß ein zentral gesteuerter Luftstrom austritt, der in den Schacht eintritt, dort gekühlt wird und sich im Fußbodenbereich des Raumes ausbreitet. Zusätzlich kann der Schlitzdurchlaß eine Luftauslaßöffnung für einen entlang der Decke streichenden Luftstrom aufweisen. Die Kühlflächen nehmen Wärme hauptsächlich in Form von Strahlungsenergie auf und geben die aufgenommene Wärme an die gekühlten Wärmeleitschienen weiter. Die Wärmeleitschienen können ihrerseits aus der gleichen Kühlmittelquelle versorgt werden wie der Kühlkonvektor.

Bei der Erfindung sind gute Voraussetzungen für die Aufnahme von Wärme aus im Raum verteilten Strahlungsquellen gegeben. Insbesondere können die Kühlflächen zur Vertikalen unter einem Winkel von ca. 30 Grad und die Verbindungsabschnitte unter einem Winkel von ca. 60 Grad ausgerichtet sein.

Grundsätzlich genügt es, wenn jedes Kühlblech an wenigstens einer Wärmeleitschiene abgestützt ist. Je nach Ausdehnung der Kühlbleche kann es aber erforderlich sein, die Kühlbleche an mehreren Wärmeleitschienen abzustützen.

Die Wärmeleitschienen sind zweckmäßig außen am Schacht angeordnet, so daß die Kühlbleche mit Abstand vor dem Schacht angebracht sind. Ein Zwischenraum zwischen dem Schacht und den Kühlblechen kann mit Isoliermaterial gefüllt sein, so daß der Kühlbereich im Schacht einerseits und der Kühlbereich an den Kühlflächen andererseits thermisch voneinander isoliert sind.

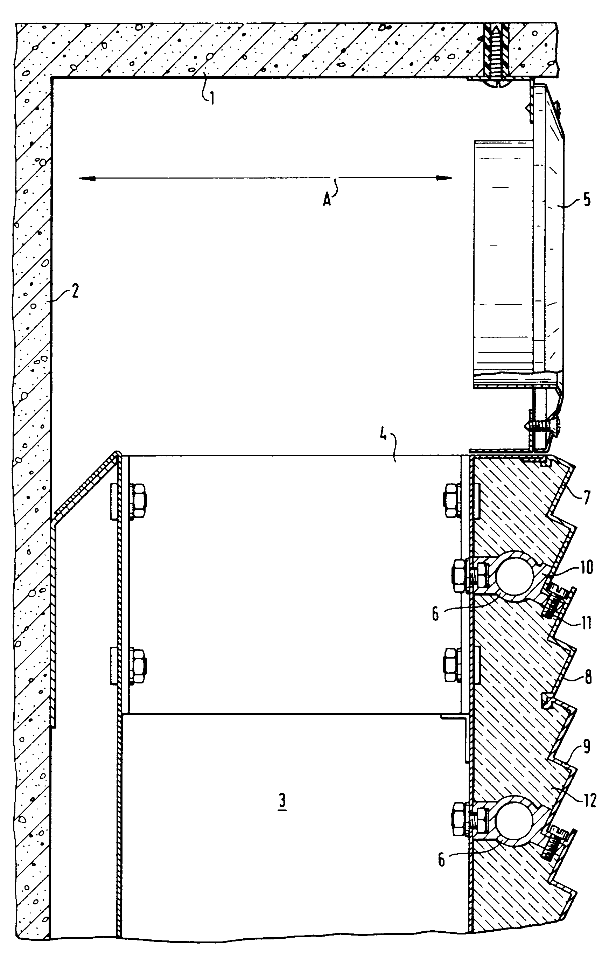

Im folgenden wird ein in der Zeichnung dargestelltes Ausführungsbeispiel der Erfindung erläutert;
Die einzige Figur zeigt schematisch und teilweise einen vertikalen Schnitt durch eine Vorrichtung zum Kühlen von Raumluft.

In der Zeichnung ist der obere Anschlußbereich zwischen einer Raumdecke 1 und einer Raumwand 2 wiedergegeben. Unterhalb der Raumdecke 1 ist an der Raumwand 2 ein Schacht 3 befestigt, der oben und unten offen ist. Im oberen Bereich des Schachtes 3 ist ein Kühlkonvektor 4 angeordnet, der in nicht dargestellter Weise von einem Kühlmittel durchströmt wird. Zwischen dem oberen Ende des Schachtes 3 und der Raumdecke 1 ist raumseitig ein Lufteinlaß 5 angeordnet, so daß sich im Raum eine Konvektionsströmung ausbilden kann, die den Schacht 3 mit dem Kühlkonvektor 4 passiert. Der gekühlte Luftstrom tritt am unteren offenen Ende des Schachtes 3 aus dem Schacht 3 aus und verteilt sich dann wieder im Raum.

An der raumseitigen Außenseite des Schachtes 3 sind vertikal übereinander und mit gegenseitigem Abstand mehrere Wärmeleitschienen 6 angeordnet, die von einem Kühlmittel durchflossen sind. Dementsprechend sind die Wärmeleitschienen 6 an eine nicht dargestellte Kühlmittelquelle angeschlossen, die auch den Kühlkonvektor 4 versorgt. An jeder Wärmeleitschiene 6 ist bei der dargestellten Ausführung ein Kühlblech 7 befestigt.

Die Kühlbleche 7 bestehen aus Kühlflächen 8 und Verbindungsabschnitten 9, die sich jeweils horizontal erstrecken. Bei der dargestellten Ausführung erstrecken sich die Kühlflächen 8 zur Vertikalen unter einem Winkel von 30 Grad und die Verbindungsabschnitte unter einem Winkel von 60 Grad. Die Kühlflächen 8 sind so ausgerichtet, daß ihre Normalen zum Raumboden gerichtet sind. Wie man der Zeichnung entnimmt, sind dementsprechend die Querschnitte der Kühlbleche 7 zick-zack-förmig ausgebildet. Die Kühlflächen 8 stoßen senkrecht auf die Verbindungsabschnitte 9. Die Wärmeleitschienen 6 besitzen dementsprechend eine winkelförmige Anschlußkonsole 10, die den Anschlußbereich einer Kühlfläche 8 und eines Verbindungsabschnittes 9 wärmeleitend aufnimmt. Die Befestigung erfolgt mit Hilfe von Schrauben 11. Der Zwischenraum zwischen den im Abstand vor der Außenseite des Schachtes 3 angeordneten Kühlblechen 7 und dieser Außenseite des Schachtes 3 ist mit Isoliermaterial 12 gefüllt, so daß der Kühlbereich des Schachtes 3 vom Kühlbereich der Kühlflächen 8 thermisch isoliert ist.

Bei einer nicht dargestellten Ausführung kann im Bereich A oberhalb des Schachtes 3 in der Raumdecke 1 ein nicht dargestellter Schlitzauslaß vorgesehen sein, der an eine zentrale Luftversorgungsanlage angeschlossen ist. Der aus diesem Schlitzauslaß gesteuert zugeführte Luftstrom durchströmt den Schacht 3, wird dabei gekühlt und verteilt sich anschließend im Fußbodenbereich des Raumes. Der nicht dargestellte Schlitzauslaß kann außerdem einen Luftauslaßöffnung für einen entlang der Raumdecke 1 streichenden Luftstrom aufweisen. Dieser zusätzliche Luftauslaß kann dem Lufteinlaß bei der dargestellten Ausführung entsprechen.

## Patentansprüche

1. Vorrichtung zum Kühlen von Raumluft, die einen an einer Raumwand (2) anbringbaren Schacht (3) mit einem darin angeordneten, von einem Kühlmittel durchströmten Kühlkonvektor (4) aufweist, wobei der Schacht (3) oben und unten offen ist und raumseitig am Schacht (3) Kühlbleche (7) mit Kühlflächen (8) angeordnet sind, die wärmeleitend an von dem Kühlmittel durchströmten Wärmeleitschienen (6) abgestützt sind, **dadurch gekennzeichnet,** daß die Kühlflächen (8) unter einem Winkel zur Vertikalen angeordnet sind, wobei ihre Normalen zum Raumboden ausgerichtet sind, und daß die vertikalen Querschnitte der Kühlbleche (7) zick-zack-förmig ausgebildet sind, wobei die Kühlbleche (7) aus den Kühlflächen (8) sowie aus Verbindungsabschnitten (9) bestehen.

2. Vorrichtung nach Anspruch 1, **dadurch gekennzeichnet,** daß der Schacht (3) unterhalb einer Raumdecke (1) endet.

3. Vorrichtung nach Anspruch 1, **dadurch gekennzeichnet,** daß das obere Ende des Schachtes (3) unter einem Schlitzdurchlaß der Raumdecke (1) angeordnet ist.

4. Vorrichtung nach Anspruch 3, **dadurch gekennzeichnet,** daß der Schlitzdurchlaß außerdem eine Luftauslaßöffnung für einen entlang der Raumdecke (1) streichenden Luftstrom aufweist.

5. Vorrichtung nach einem der Ansprüche 1 bis 4, **dadurch gekennzeichnet,** daß die Kühlflächen (8) zur Vertikalen unter einem Winkel von ca. 30 Grad und die Verbindungsabschnitte unter einem Winkel von ca. 60 Grad angeordnet sind.

6. Vorrichtung nach einem der Ansprüche 1 bis 5, **dadurch gekennzeichnet,** daß jedes Kühlblech (7) an wenigstens einer Wärmeleitschiene (6) abgestützt ist.

7. Vorrichtung nach einem der Ansprüche 1 bis 6, **dadurch gekennzeichnet,** daß die Wärmeleitschienen (6) außen am Schacht (3) angeordnet sind, daß die Kühlbleche (7) mit Abstand vor dem Schacht (3) angebracht sind, und daß der Zwischenraum zwischen dem Schacht (3) und den Kühlblechen (7) mit Isoliermaterial (12) gefüllt ist.

## Claims

1. Apparatus for cooling air in a room, which apparatus includes a shaft (3), which is mountable on a wall (2) of a room and provided with a cooling convector (4), which is disposed in said shaft and traversed by a coolant, the shaft (3) being open at its upper and lower ends, and cooling plates (7) being disposed on the side of the shaft (3) facing the room, said plates being formed with cooling surfaces (8) supported in a heat-conductive manner on heat conducting rails (6), which are traversed by the coolant, characterised in that the cooling surfaces (8) are disposed at an angle to the vertical, their normals being orientated relative to the floor of the room, and in that the vertical cross-sections of the cooling plates (7) have a zigzag-shaped configuration, the cooling plates (7) comprising the cooling surfaces (8) and connection portions (9).

2. Apparatus according to claim 1, characterised in that the shaft (3) terminates beneath a ceiling (1) of a room.

3. Apparatus according to claim 1, characterised in that the upper end of the shaft (3) is disposed beneath a slotted conduit on the ceiling (1) of a room.

4. Apparatus according to claim 3, characterised in that the slotted conduit also has an air outlet aperture for discharging a current of air flowing along the ceiling (1) of a room.

5. Apparatus according to one of claims 1 to 4, characterised in that the cooling surfaces (8) are disposed at an angle of approx. 30 degrees relative to the vertical, and the connection portions are disposed at an angle of approx. 60 degrees relative to the vertical.

6. Apparatus according to one of claims 1 to 5, characterised in that each cooling plate (7) is supported on at least one heat conducting rail (6).

7. Apparatus according to one of claims 1 to 6, characterised in that the heat conducting rails (6) are disposed externally on the shaft (3), in that the cooling plates (7) are mounted in front of the shaft (3) with a spacing therebetween, and in that the space between the shaft (3) and the cooling plates (7) is filled with insulating material (12).

## Revendications

1. Dispositif pour refroidir l'air d'un local, ce dispositif présentant une gaine (3) pouvant être fixée à un mur (2) du local et dans laquelle est disposé un convecteur de refroidissement (4) dans lequel circule un réfrigérant, la gaine (3) étant ouverte vers le haut et vers le bas, et des tôles de refroidissement (7) étant disposées du côté du local sur la gaine (3), ces tôles comprenant des surfaces de refroidissement (8) qui sont soutenues en conduction thermique par des profilés de conduction thermique (6) dans lesquels circule le réfrigérant, **caractérisé** en ce que les surfaces de refroidissement (8) sont disposées sous un angle par rapport à la verticale, leurs perpendiculaires étant dirigées vers le plancher du local, et on ce que les sections verticales des tôles de refroidissement (7) sont configurées en zigzag, les tôles de refroidissement (7) étant constituées des surfaces de refroidissement (8) ainsi que de parties de liaison (9).

2. Dispositif selon la revendication 1, **caractérisé** en ce que la gaine (3) se termine en dessous du plafond (1) du local.

3. Dispositif selon la revendication 1, **caractérisé** en ce que l'extrémité supérieure de la gaine (3) est disposée en dessous d'une bouche d'air du plafond (1) du local.

4. Dispositif selon la revendication 3, **caractérisé** en ce que la bouche d'air présente en outre une ouverture d'évacuation d'air pour un courant d'air circulant le long du plafond (1) du local.

5. Dispositif selon l'une des revendications 1 à 4, **caractérisé** en ce que les surfaces de refroidissement (7) sont disposées sous un angle d'environ 30° par rapport à la verticale, et les parties de liaison sous un angle d'environ 60°.

6. Dispositif selon l'une des revendications 1 à 5, **caractérisé** en ce que chaque tôle de refroidissement (7)est soutenue par au moins un profilé de conduction thermique (6).

7. Dispositif selon l'une des revendications 1 à 6, **caractérisé** en ce que les profilés de conduction thermique (6) sont disposés extérieurement sur la gaine (3), en ce que les tôles de refroidissement (7) sont disposées à distance devant la gaine (3), et en ce que l'espace intermédiaire entre la gaine (3) et les tôles de refroidissement (7) est rempli de matériau isolant (12).
